# EUROPÄISCHE PATENTSCHRIFT

(11) **EP 1 395 696 B1**
(45) Veröffentlichungstag und Bekanntmachung des Hinweises auf die Patenterteilung: **22.08.2007**
(21) Anmeldenummer: 02751024.7
(22) Anmeldetag: 13.06.2002
(51) Int. Cl.: D06F 73/02

(54) **VERFAHREN UND VORRICHTUNG ZUM BEHANDELN VON BEZÜGEN VON SITZEN FÜR VERKEHRSMITTEL**
METHOD AND DEVICE FOR TREATING SEAT COVERS FOR TRANSPORT VEHICLES
PROCEDE ET DISPOSITIF DE TRAITEMENT DE HOUSSES CON UES POUR DES SIEGES DE MOYENS DE TRANSPORT

(30) Priorität: 15.06.2001 DE 10128662
(43) Veröffentlichungstag der Anmeldung: 10.03.2004
(73) Patentinhaber: Herbert Kannegiesser GmbH, 32602 Vlotho (DE)
(72) Erfinder: HEINZ, Engelbert, 32602 Vlotho (DE); DREISCHMEIER, Wilfried, 32602 Vlotho (DE); WURM, Henry, F-67480 Roeschwoog (FR)
(74) Vertreter: Hemmelmann, Klaus
(86) Internationale Anmeldenummer: PCT/EP2002/006493
(87) Internationale Veröffentlichungsnummer: WO 2002/103101

(56) Entgegenhaltungen:
- DE-A- 3 119 560
- US-B1- 6 405 461
- DATABASE WPI Section Ch, Week 198413 Derwent Publications Ltd., London, GB; Class F07, AN 1984-079611 XP002902730 & JP 59 032492 A (TOKYO SHEET KK), 21. Februar 1984 (1984-02-21)
- DATABASE WPI Section Ch, Week 198413 Derwent Publications Ltd., London, GB; Class F07, AN 1984-078037 XP002902731 & JP 59 028992 A (TOKYO SHEET KK), 15. Februar 1984 (1984-02-15)

## Beschreibung

Die Erfindung betrifft ein Verfahren zur Behandlung von Bezügen für Sitze von Verkehrsmitteln gemäß dem Oberbegriff des Anspruchs 1. Des Weiteren betrifft die Erfindung eine entsprechende Vorrichtung gemäß dem Oberbegriff des Anspruchs 9.

Bei Sitzen für Verkehrsmittel wie insbesondere Pkws, Lkws, Schienenfahrzeuge, Flugzeuge oder dergleichen werden die Bezüge nach der Aufbringung auf die Sitze sogenannten Finishbehandlungen unterzogen. Dabei werden die Bezüge mit insbesondere Dampf geglättet. Dieses erfolgt bislang manuell, nachdem der Bezug auf das Gestell des Sitzes aufgezogen worden sind. Dabei wird von einer Bedienungsperson eine handgeführte Dampfdüse über die Flächen des Sitzbezugs hinwegbewegt. Abgesehen von dem damit verbundenen manuellen Aufwand kommt es zwangsläufig dazu, dass Bereiche der Fläche des Bezugs unterschiedlich intensiv mit Dampf beaufschlagt werden. Schwer zugängliche Stellen der Flächen des Bezugs werden weniger und in Extremfällen gar nicht behandelt. Die Folge ist eine ungleichmäßige Glättung des Bezugs. In Extremfällen kann es sogar dazu kommen, dass manche Stellen des Bezugs zu lange dem Dampf ausgesetzt und damit beschädigt werden.

Hiervon ausgehend liegt der Erfindung die Aufgabe zugrunde, ein Verfahren und eine Vorrichtung zu schaffen, womit Bezüge von Sitzen für Verkehrsmittel automatisch in den Anforderungen gerechtwerdender Weise, insbesondere gleichmäßig, behandelt werden.

Ein Verfahren zur Lösung dieser Aufgabe weist die Maßnahmen des Anspruchs 1 auf. Demnach werden die fertigen Sitze mit auf ihrem Gestell aufgezogenen Bezügen in mindestens einer Behandlungskammer unter Verwendung von wenigstens Dampf behandelt. Die Behandlungskammer ermöglicht es, die Sitze als Ganzes dem zur Behandlung dienenden Dampf auszusetzen. Dadurch ist automatisch, also ohne manuellen Einsatz, eine gleichmäßige Finishbehandlung der Bezüge gewährleistet. Der in der Behandlungskammer verteilte Dampf kann gleichmäßig an alle Stellen des sich auf dem Sitz befindlichen Bezugs gelangen. Außerdem ist der Dampf in der Behandlungskammer gezielt dosierbar, so dass Schäden an den Bezügen durch übermäßige Dampfbehandlung praktisch nicht auftreten können.

Gemäß einer bevorzugten Ausgestaltung des Verfahrens werden die ganzen, komplett montierten Sitze der Finishbehandlung unterzogen, also mit ihrem Gestell und gegebenenfalls einem Unterbau. Dadurch ist es möglich, die Sitze gezielt auf einem Förderer zu positionieren, der sie durch die einzige oder auch mehrere Behandlungskammern hindurchtransportiert. Aufgrund der gezielten Positionierung auf dem Förderer können die Sitze in einer exakt vorherbestimmbaren Position in der Behandlungskammer gefinisht werden. Die genaue Position der Sitze in der Behandlungskammer ermöglicht es, Dampfdüsen oder dergleichen gezielt in der Behandlungskammer zu positionieren; und zwar abgestimmt auf die Relativposition der Sitze, mit der sie die Behandlungskammer durchlaufen. Es ist dadurch sichergestellt, dass die Dampfdüsen den richtigen Abstand zu den Bezügen aufweisen und alle Stellen derselben mit Dampf oder dergleichen versorgt werden.

Vorzugsweise werden die Sitze quergerichtet durch die jeweilige Behandlungskammer hindurchtransportiert. Das ermöglicht es, Einlauf- und Auslauföffnungen der Sitze in die Behandlungskammer und aus der Behandlungskammer heraus so klein wie möglich auszubilden, weil die Querschnittsfläche der Sitze möglicherweise kleiner ist als ihre Rückenfläche.

Zweckmäßigerweise werden in mindestens einer Behandlungskammer die fertig montierten Sitze sowohl mit Dampf als auch mit Luft, insbesondere heiße Umluft, behandelt. Dabei weist vorzugsweise die Heißluft eine höhere Temperatur auf als der Dampf. Das führt zu einer Feinstverteilung des Dampfs in der Behandlungskammer, wodurch eine besonders gleichmäßige Behandlung aller Bereiche der Bezüge, und zwar auch manuell schwer zugänglicher Bereiche, gewährleistet ist.

Es ist verfahrensmäßig des Weiteren vorgesehen, die fertigen Sitze in mindestens einer Behandlungskammer zu trocknen. Eine solche Trocknung in einer abgeschlossenen Kammer ist besonders rasch und zuverlässig durchführbar, so dass beim Verlassen der Trocknungskammer die Sitze komplett trocken sind, und zwar auch das mit durch die Behandlungskammer laufende Gestell und gegebenenfalls ein Unterbau des jeweiligen Sitzes. Dadurch wird zuverlässig vermieden, dass Restfeuchtigkeit an bzw. in den Sitzen zurückbleibt, die zur Korrosionen oder dergleichen führen könnte. Alternativ ist es auch denkbar, die Trocknung der gefinishten Sitze außerhalb einer Behandlungskammer durchzuführen.

Vorzugsweise erfolgt eine Abfuhr der Luft und/oder des Dampfs aus der Behandlungskammer oberhalb eines Förderers zum Hindurchtransportieren der Sitze durch die betreffende Behandlungskammer. Dadurch bleibt der Förderer im Wesentlichen trocken, wodurch dieser keine Feuchtigkeit aus der Behandlungskammer herausschleppt bzw. kalte Flüssigkeit beim erneuten Einfahren in die zur Dampfbehandlung dienende Behandlungskammer einbringt. Alternativ oder zusätzlich ist es auch möglich, Dampf und gegebenenfalls auch Luft oberhalb der Sitze aus der betreffenden Behandlungskammer abzuführen. Dadurch kann der üblicherweise oberhalb des Förderers auf den Bezug gerichtete Dampf nicht an den Förderer gelangen und hier kondensieren.

Eine Vorrichtung zur Lösung der eingangs genannten Aufgabe weist die Merkmale des Anspruchs 9 auf. Durch die mindestens eine Behandlungskammer, der Dampf und/oder Luft zuführbar ist, und einen durch die Behandlungskammer hindurch verlaufenden Förderer kann die Finishbehandlung automatisch erfolgen, indem in der Behandlungskammer die Sitze mit mindestens dem zum Glätten dienenden Dampf beaufschlagt werden und der Förderer die Sitze nicht nur durch die Behandlungskammer hindurchführt; vielmehr die Sitze in bestimmte Positionen in der jeweiligen Behandlungskammer bringt. Durch eine entsprechende Fördergeschwindigkeit kann die Verweildauer der Sitze in der jeweiligen Behandlungskammer und damit die Intensität der Behandlung den Bedürfnissen, insbesondere Materialien der Bezüge, angepasst werden.

Gemäß einer bevorzugten Ausgestaltung der Vorrichtung ist jede Behandlungskammer so ausgebildet, dass ganze Sitze mit ihrem Untergestell vom Förderer durch die jeweilige Behandlungskammer hindurchtransportierbar sind. Vorzugsweise ist dazu der Förderer mit einem Sitzträger versehen, auf dem die Sitze mit ihrem Unterbau zum Hindurchtransport durch die jeweilige Behandlungskammer angeordnet sind. Bevorzugt sind die Sitze mit ihrem Unterbau lösbar auf dem Sitzträger befestigt. Die Sitzträger sind mit Abstand aufeinanderfolgend am Förderer oder auf dem Förderer angeordnet, wobei vorzugsweise jeder Sitzträger zur Aufnahme eines (einzigen) kompletten Sitzes ausgebildet ist. Durch diese Gestaltung des Förderers ist es einfach möglich, die Sitze mit dem Sitzträger zum Hindurchtransportieren durch die jeweilige Behandlungskammer zu verbinden. Da der Unterbau der Sitze ohnehin Befestigungsmittel aufweist, die zum späteren Befestigen der Sitze im Verkehrsmittel dienen, können diese Befestigungsmittel zur lösbaren Verbindung mit dem Sitzträger verwendet werden, wozu der Sitzträger korrespondierend zu den Befestigungsmitteln am Unterbau des Sitzes ausgebildet ist. Durch die Befestigung der Sitze am Förderer, und zwar insbesondere auf Sitzträgern, erhalten die Sitze stets die gleiche Position auf dem Förderer, so dass sie in gezielter Relativposition durch die jeweilige Behandlungskammer hindurchtransportierbar sind. Durch die Anordnung eines einzelnen Sitzes auf jedem Sitzträger und die mit Abstand aufeinanderfolgenden Sitzträger ist gewährleistet, dass entweder sich nur ein einzelner Sitz in der jeweiligen Behandlungskammer befinden oder die Sitze in der jeweiligen Behandlungskammer einen solchen Abstand zueinander aufweisen, dass Dampf und gegebenenfalls Luft bzw. Umluft allseitig an die Sitze gelangen können und damit eine gleichmäßige Behandlung der Bezüge möglich ist. Denkbar ist es aber auch, die Sitzträger so auszubilden, dass hierauf mehrere Sitze, insbesondere eine ganze Sitzgruppe beispielsweise eines Pkws, Platz hat.

Die Vorrichtung weist vorzugsweise mindestens einen Behandlungsraum zur Behandlung der Bezüge mit Dampf und gegebenenfalls heißer Luft bzw. Umluft auf und mindestens einen weiteren Behandlungsraum zur Trocknung der behandelten Sitze. Es ist aber auch denkbar, mehrere Behandlungsräume sowohl zur Dampfbehandlung als auch zur Trocknung vorzusehen. Die Behandlungsräume zur Dampfbehandlung und zur Trocknung sind vorzugsweise durch eine eine Durchtrittsöffnung für mindestens die Sitze aufweisende Trennwand voneinander getrennt. Dadurch kann sich in demjenigen Behandlungsraum, indem die Dampfbehandlung stattfindet, stets Dampf befinden, während im darauffolgenden Behandlungsraum zur Trocknung der behandelten Sitze stets ein zum Trocknen benötigtes Klima herrscht. Es ist so eine kontinuierliche Dampfbehandlung und Trocknung aufeinanderfolgender Sitze, die vom Förderer vorzugsweise kontinuierlich durch die Vorrichtung hindurchtransportiert werden, möglich.

Gemäß einer bevorzugten Weiterbildung der Vorrichtung sind die Einlauföffnungen zum Einfördern der Sitze in die erste Behandlungskammer und/oder die Auslauföffnung zum Herausfördern der behandelten Sitze aus der letzten Behandlungskammer schleusenartig ausgebildet. Dadurch wird gewährleistet, dass der Dampf und/oder die Luft in den Behandlungskammern bleiben und nicht nach außen gelangen. In den schleusenartigen Bereichen der Einlauföffnung und/oder der Auslauföffnung wird vorzugsweise ein Unterdruck erzeugt. Dieser führt in den schleusenartig ausgebildeten Bereichen der Einlauföffnung und/oder der Auslauföffnung zu einem Luftschleier, der einen Austausch der Umgebungsluft mit der Luft in der jeweiligen Behandlungskammer mindestens größtenteils verhindert. Dadurch brauchen die Einlauföffnungen und/oder die Auslauföffnungen keine mechanischen Verschlüsse, wie zum Beispiel Türen, aufzuweisen. Die Einlauföffnungen und/oder Auslauföffnungen können stets offen bleiben zum ungehinderten Eintransport von Sitzen in die Vorrichtung und vorzugsweise auch zum Heraustransportieren der behandelten Sitze aus der Vorrichtung.

Zwei bevorzugte Ausführungsbeispiele der erfindungsgemäßen Vorrichtung und des Verfahrens werden nachfolgend anhand der Zeichnung näher erläutert. In dieser zeigen:
- Fig. 1: eine schematische Grundrissdarstellung eines ersten Ausführungsbeispiels der Vorrichtung,
- Fig. 2: einen Querschnitt II-II durch eine erste Behandlungskammer der Vorrichtung,
- Fig. 3: einen Querschnitt III-III durch eine zweite Behandlungskammer der Vorrichtung,
- Fig. 4: eine schematische Grundrissdarstellung einer Vorrichtung nach einem zweiten Ausführungsbeispiel der Erfindung,
- Fig. 5: einen Querschnitt V-V durch eine erste Behandlungskammer der Vorrichtung der Fig. 4, und
- Fig. 6: einen Querschnitt VI-VI durch eine zweite Behandlungskammer der Vorrichtung der Fig. 4 und 5.

Die hier gezeigte Vorrichtung dient zum automatischen Behandeln von Sitzen 10 für Verkehrsmittel, beispielsweise Pkws, Lkws, Schienenfahrzeuge, Luftfahrzeuge oder dergleichen. In der im Fachjargon als Tunnelfinisher bezeichneten Vorrichtung werden Bezüge 11 der Sitze 10 mit Dampf und gegebenenfalls zusätzlich Luft maschinell geglättet und dadurch einer abschließenden Finishbehandlung unterzogen.

Die Vorrichtung weist ein kastenförmiges Gehäuse 12 auf, das im Wesentlichen luftdicht ausgebildet ist. Die zu behandelnden Sitze 10 werden im im Wesentlichen fertigen Zustand in Behandlungsrichtung 13, und zwar im gezeigten Ausführungsbeispiel geradlinig, von einem Förderer 14 durch die Vorrichtung hindurchtransportiert.

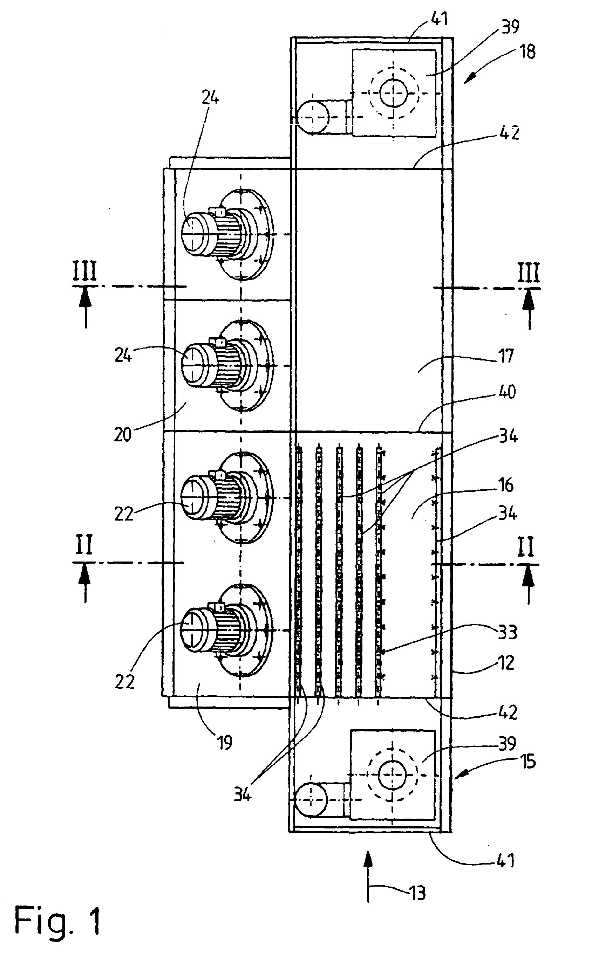

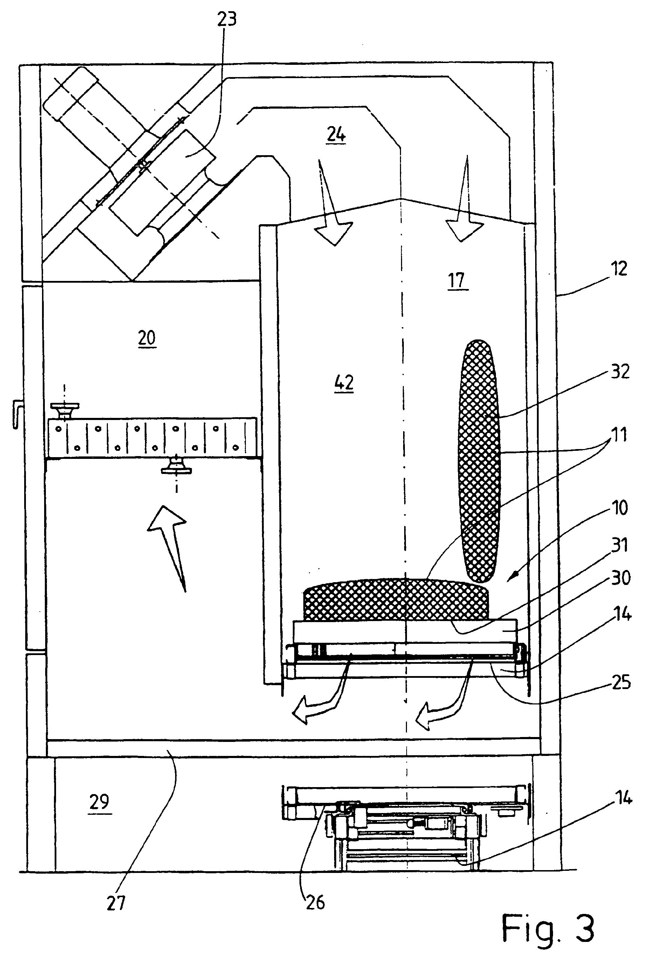

Die hier beispielhaft gezeigte Vorrichtung verfügt über eine Einlaufschleuse 15, eine erste Behandlungskammer 16, eine zweite Behandlungskammer 17 und eine Auslaufschleuse 18, die in der vorstehend erwähnten Reihenfolge in Behandlungsrichtung 13 aufeinanderfolgend hintereinander angeordnet sind. Neben der ersten Behandlungskammer 16 und der zweiten Behandlungskammer 17 sind bei der in den Fig. 1 bis 3 gezeigten Vorrichtung Seitenkammern 19 und 20 angeordnet.

Im gezeigten Ausführungsbeispiel befindet sich oberhalb der ersten Behandlungskammer 16 und der daneben angeordneten Seitenkammer 19 eine Ventilationskammer 21, in der hier zwei elektromotorisch betriebene Ventilatoren 22 angeordnet sind. Ebenso befindet sich oberhalb der zweiten Behandlungskammer 17 und der daneben sich befindenden Seitenkammer 20 eine Ventilationskammer 23 mit wiederum zwei Ventilatoren 24.

Der Förderer 14 ist als Stetigförderer ausgebildet. Es kann sich hierbei um einen Förderer 14 üblicher Bauart handeln, beispielsweise einen Kettenförderer oder einen Friktionsrollenförderer. Der Förderer erstreckt sich in Behandlungsrichtung 13 geradlinig durch die gesamte Vorrichtung. Ein Teil der Förderstrecke des Förderers 14 befindet sich außerhalb des Gehäuses 12 der Vorrichtung, und zwar sowohl vor der Vorrichtung als auch dahinter. Der Förderer 14 ist als Endlosförderer ausgebildet. Ein Obertrum 25 des Förderers 14 verläuft teilweise durch die Einlaufschleuse 15, die erste Behandlungskammer 16, die zweite Behandlungskammer 17 und die Auslaufschleuse 18. Ein Untertrum 26 des Förderers 14 verläuft mit Abstand unterhalb des Obertrums 25, und zwar in einem durch einen Zwischenboden 27 von den Behandlungskammern 16 und 17 und der Einlaufschleuse 15 sowie Auslaufschleuse 18 getrennten Zwischenraum 29.

Auf dem Förderer 14 sind einzelne Sitzträger 30 angeordnet. Vorzugsweise ist der jeweilige Sitzträger 30 zur Aufnahme eines einzelnen Sitzes 10 ausgebildet. Jeweils ein Sitz 10 wird mit seinem Gestell 31, und zwar einem Unterbau des Gestells 31, lösbar auf dem Sitzträger 30 befestigt. Dazu können Befestigungsmittel am Unterteil des Gestells 31 des Sitzes 10 dienen, die üblicherweise verwendet werden, um den Sitz später im betreffenden Verkehrsmittel zu verankern. Die Sitzträger 30 können fest mit dem Förderer 14 verbunden sein, sich aber auch lediglich lose auf dem Förderer befinden. Dann sind die Sitzträger 30 vom Förderer 14 abnehmbar und können unter dem Gestell 31 des jeweiligen Sitzes 10 vormontiert werden, so dass der zu behandelnde Sitz 10 mit dem Sitzträger 30 auf den Förderer 14 lediglich aufgesetzt und nach der Behandlung abgenommen zu werden braucht.

Die fest mit dem Förderer 14 verbundenen Sitzträger 30 folgen mit gleichmäßigen Abständen aufeinander. Die losen Sitzträger 30 können hingegen an beliebigen Stellen auf den Förderern 14 aufgesetzt werden, wobei lediglich zu berücksichtigen ist, dass ein gewisser Abstand zum vorausgehenden Sitzträger 30 vorhanden ist, damit die Sitze 10 bei der Behandlung von allen Seiten zugänglich sind.

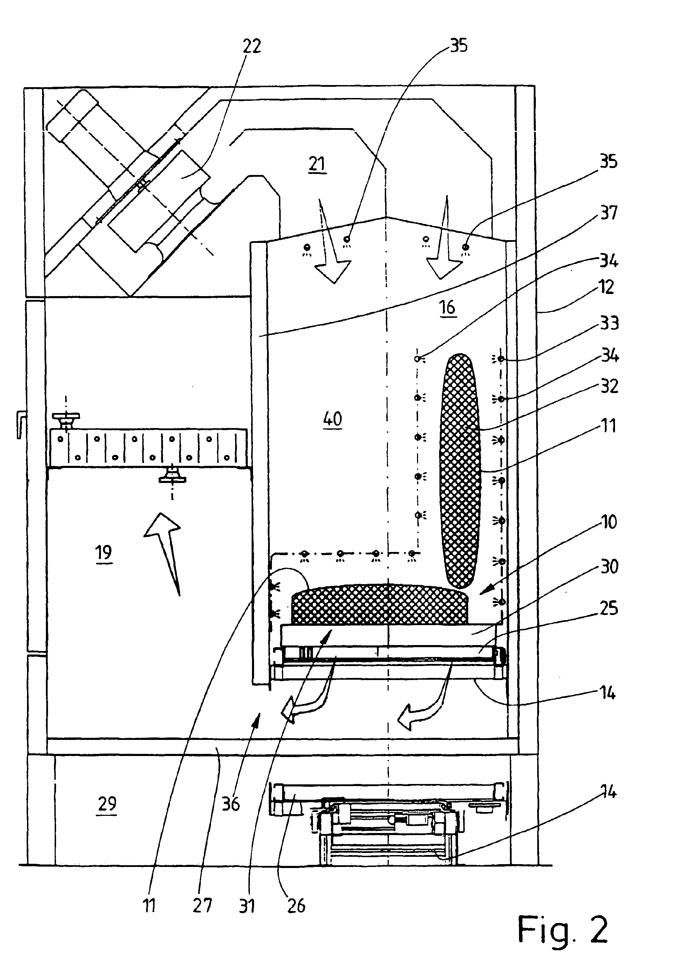

Die Sitze 10 werden quergerichtet zur Behandlungsrichtung 13 auf den Sitzträgern 30 angeordnet (Fig. 2). Die Sitze 10 werden also nicht so wie im Verkehrsmittel durch die Vorrichtung hindurchbewegt, sondern in einen bezüglich einer vertikalen Achse um 90° gedrehten Zustand. Die Fläche der Rückenlehnen 32 des Sitzes 10 verläuft dann parallel zur Behandlungsrichtung 13 und befindet sich dabei außermittig in den Behandlungskammern 16 und 17.

In der ersten Behandlungskammer 16 werden die zu behandelnden Sitze 10 mit Dampf behandelt. Dazu sind in der ersten Behandlungskammer 16 mehrere Dampfdüsen 33 angeordnet. Die vorzugsweise gleich ausgebildeten Dampfdüsen 33 sind dem Profilverlauf des quergerichteten Sitzes 10 angepasst. Dazu sind die Dampfdüsen 33 so in der ersten Behandlungskammer 16 positioniert, dass sie mit im Wesentlichen gleichmäßigen Abständen von den Flächen des Sitzes 10 diesen größtenteils umgeben mit Ausnahme einer oberen Kante der Rückenlehne 32. Die Dampfdüsen 33 sind an parallel zur Behandlungsrichtung 13 verlaufenden Dampfrohren 34 angeordnet. Jedes der Dampfrohre 34 ist ortsfest in der ersten Behandlungskammer 16 angeordnet. Des Weiteren weist jedes Dampfrohr 34 mehrere in gleichmäßigen Abständen aufeinanderfolgende Dampfdüsen 33 auf, die senkrecht zu den ihr zugeordneten Flächen des Sitzes 10 ausgerichtet sind (Fig. 2). Die Abstände der Dampfdüsen 33 am jeweiligen Dampfrohr 34 und die Abstände der Dampfrohre 34 sind so bemessen, dass zwischen benachbarten Dampfdüsen 33 in allen Richtungen etwa gleiche Abstände vorhanden sind, so dass die Dampfdüsen 33 die Flächen des Sitzes 10 gleichmäßig mit Dampf beaufschlagen.

Im gezeigten Ausführungsbeispeil sind im oberen Bereich der ersten Behandlungskammer 16, unterhalb der Ventilationskammer 21, weitere Dampfrohre 35 mit einer Reihe von Dampfdüsen 33 angeordnet. Diese führen der Behandlungskammer 16 von oben Dampf zu.

Bei der Vorrichtung der Fig. 1 bis 3 wird in die erste Behandlungskammer 16 von oben erwärmte Luft bzw. Heißluft eingeleitet. Die Heißluft wird von den Ventilatoren 22 durch die Ventilationskammer 21 von oben in die erste Behandlungskammer 16 eingeleitet. Die Heißluft weist eine Temperatur auf, die höher ist als die Temperatur des Dampfs. Die Heißluft dient zur Verteilung des Dampfs in der ersten Behandlungskammer 16 und zur Abfuhr abgekühlten Dampfs. Dieser abgekühlte Dampf wird mit der ebenfalls abgekühlten Luft zur Unterseite der ersten Behandlungskammer 16 geführt. Dementsprechend strömt die Heißluft von oben nach unten durch die erste Behandlungskammer 16. Unterhalb des Sitzes 10 und des Obertrums 25 des Förderers 14 sammelt sich die Luft mit dem Dampf. Durch einen Überströmkanal 36 über dem Zwischenboden 27 der ersten Behandlungskammer 16 gelangt die Luft aus der ersten Behandlungskammer 16 heraus in die daneben angeordnete Seitenkammer 19. Hier wird die Luft abgeleitet, und zwar vorzugsweise an die Umgebung. Vorher kann eine Filterung oder sonstige Aufbereitung der Luft erfolgen. Es ist auch denkbar, die Luft aus der Seitenkammer 19 nach gegebenenfalls einer Aufbereitung, und zwar Filterung und/oder Trocknung, direkt der Ventilationskammer 21 über der ersten Behandlungskammer 16 wieder zuzuführen. Der Überströmkanal 36 im Bodenbereich der ersten Behandlungskammer 16 wird gebildet durch eine parallel zur Behandlungsrichtung 13 verlaufenden, senkrechten Trennwand 37 zwischen der ersten Behandlungskammer 16 und der Seitenkammer 19, wobei die Trennwand 37 über dem Zwischenboden 27 der ersten Behandlungskammer 16 und der Seitenkammer 19 endet.

In der zweiten Behandlungskammer 17 erfolgt eine Trocknung der in der ersten Behandlungskammer 16 mit Dampf und gegebenenfalls heißer Luft behandelten Sitze 10. Die zweite Behandlungskammer 17 ist wie die erste Behandlungskammer 16 ausgebildet. Es fehlen nur die Dampfrohre 34 und 35 zur Dampfzuführung zu den Sitzen 10. In der zweiten Behandlungskammer 17 wird in senkrechter Strömungsrichtung erwärmte, trockene Luft an den Sitzen 10 vorbeigeleitet. Die Luft wird von den Ventilatoren 24 durch die Ventilationskammer 23 hindurch von oben in die zweite Behandlungskammer 17 eingeblasen. Nach dem Vorbeiströmen der Luft an den Sitzen 10 wird sie unterhalb der Sitze und des Förderers 14 abgeleitet in die Seitenkammer 20. Dazu strömt die Luft am Zwischenboden 27 entlang durch den Überströmkanal 36 unter der Trennwand 37 in die Seitenkammer 20. Von hier aus wird die Luft nach einer gegebenenfalls erfolgenden Aufbereitung, insbesondere Filterung und Trocknung, entweder aus dem Gehäuse 12 herausgeleitet oder erneut in die Ventilationskammer 23 geleitet.

Es ist alternativ denkbar, die Luft sowohl in der ersten Behandlungskammer 16 als auch in der zweiten Behandlungskammer 17 unterhalb des Bezugs 11 des Sitzes 10, aber noch oberhalb des Förderers 14 und vorzugsweise auch des Sitzträgers 30, durch eine entsprechende Öffnung in der Trennwand 37 hindurch seitlich in die Seitenkammer 19 bzw. 20 zu leiten. Dabei kommt die mit Feuchtigkeit angereicherte Luft größtenteils nicht mit dem Förderer 14 und den Sitzträgern 30 in Berührung, so dass hieran keine Feuchtigkeit der Luft kondensieren kann.

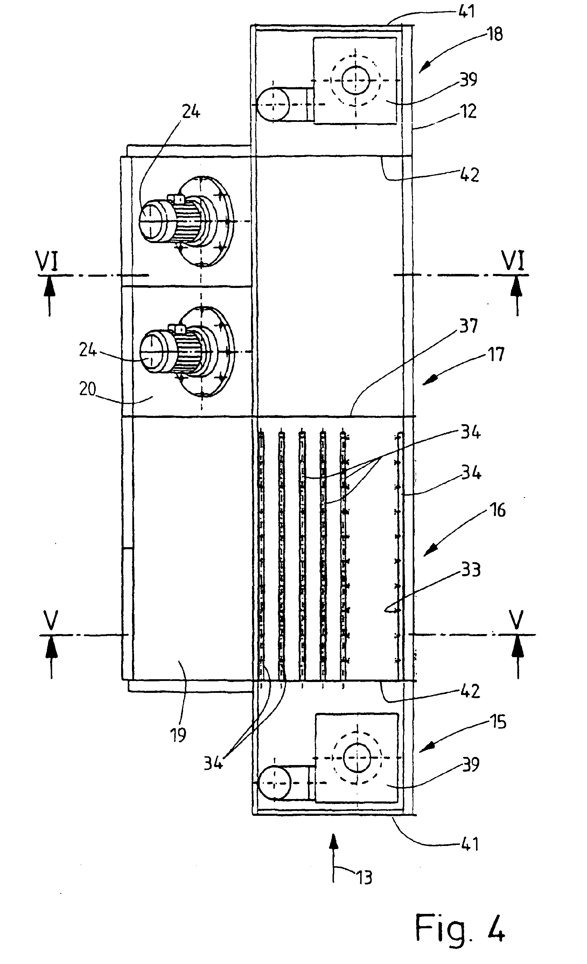

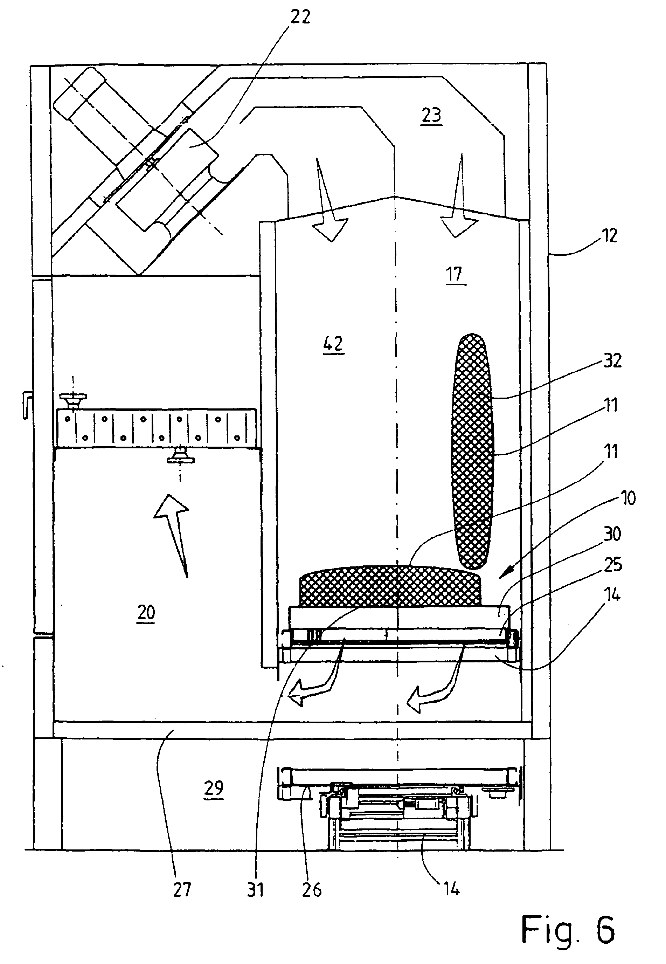

Die in den Fig. 4 bis 6 gezeigte Vorrichtung unterscheidet sich von der zuvor beschriebenen Vorrichtung dadurch, dass neben der ersten Behandlungskammer 16 keine Seitenkammer 19 vorhanden ist. Die erste Behandlungskammer 16 ist demzufolge an den Seiten vollständig geschlossen, und zwar insbesondere oberhalb einer Bodenwandung 38. Es sind auch nur Dampfrohre 34 vorgesehen, die der Kontur des Sitzes 10 folgen. Bei diesem Ausführungsbeispiel der Vorrichtung werden die Sitze 10 nur mit Dampf behandelt, es wird also der ersten Behandlungskammer 16 keine zusätzliche erwärmte Luft zugeführt.

Bei der hier gezeigten Vorrichtung ist oberhalb der ersten Behandlungskammer 16 mindestens ein Sauggebläse 39 angeordnet. Dieses saugt Luft aus der ersten Behandlungskammer 16 ab, so dass hierin ein Unterdruck entsteht, der über die Dampfdüsen 33 der Dampfrohre 34 nachströmenden Dampf kontinuierlich aus der ersten Behandlungskammer 16 heraussaugt und aus der Vorrichtung herausleitet. im Übrigen entspricht die Vorrichtung der Fig. 4 bis 6 der in den Fig. 1 bis 3 beschriebenen Vorrichtung, worauf Bezug genommen wird. Demzufolge sind gleiche Teile mit gleichen Bezugsziffern versehen.

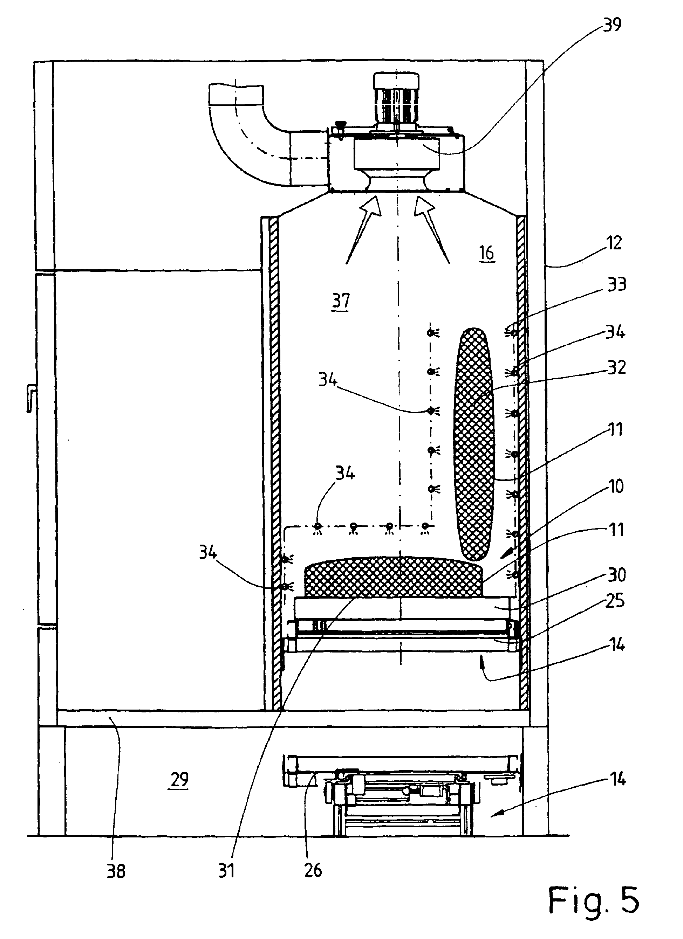

Die beiden zuvor beschriebenen Vorrichtungen verfügen zwischen der ersten Behandlungskammer 16 und der zweiten Behandlungskammer 17 über eine quer zur Behandlungsrichtung 13 verlaufende, senkrechte Trennwand 40. Diese Trennwand ist mit einer in den Figuren nicht gezeigten Durchgangsöffnung versehen, die in der Kontur dem Querschnitt des Sitzes 10 angepaßt ist, indem sie beispielsweise einen Verlauf aufweist, der der Anordnung der Dampfrohre 34 (Fig. 2 und 5) entspricht.

Die beiden Vorrichtungen gleich ausgebildete Einlaufschleuse 15 und Auslaufschleuse 18 werden gebildet durch eine Kammer vor der ersten Behandlungskammer 16 und eine Kammer hinter der zweiten Behandlungskammer 17

Die Einlaufschleuse 15 weist zwei parallele, senkrechte Wandungen auf, die quer zur Behandlungsrichtung 13 gerichtet sind. Eine äußere Wandung 41, die zugleich einen Teil der Wandung des Gehäuses 12 bildet, und eine dazu parallel verlaufende innere Wandung 42 zwischen der Einlaufschleuse 15 und der ersten Behandlungskammer 16 weisen gleichermaßen eine in den Figuren nicht gezeigte Einlauföffnung auf. Die Einlauföffnung ist wie die Öffnung in der Trennwand 40 ausgebildet, nämlich an die Querschnittskontur des Sitzes 10 angepaßt, und auch vorzugsweise etwas größer, so dass verschiedene Sitze in der Vorrichtung behandelt werden können. Die Außenkontur der Öffnungen kann einer (gedachten) Hüllkurve entsprechen, auf der die Dampfrohre 34 angeordnet sind. Es ist denkbar, die Öffnungen mindestens einer Wandung, beispielsweise der äußeren Wandung 41, mit einem flexiblen Vorhang zusätzlich zu verschließen.

Oberhalb der Einlaufschleuse 15, nämlich im Deckenbereich derselben, ist ein Sauggebläse 39 angeordnet. Dieses erzeugt einen Unterdruck in der Einlaufschleuse 15. Der dadurch entstehende senkrecht nach oben gerichtete Luftstrom bildet einen Luftschleier zum Verschluss der Öffnungen, insbesondere in der Wandung 42 zur ersten Behandlungskammer 16 der Einlaufschleuse 15.

Die Auslaufschleuse 18 ist im gezeigten Ausführungsbeispiel wie die Einlaufschleuse 15 ausgebildet und verfügt über eine gleiche Funktionsweise.

Das erfindungsgemäße Verfahren wird nachfolgend erläutert, wozu zunächst davon ausgegangen wird, dass der Förderer 14 kontinuierlich angetrieben wird und die Sitzträger 30 abnehmbar auf dem Förderer 14 angeordnet sind:

Ein fertig gepolsterter Sitz 10 wird mit dem Gestell 31 und insbesondere auch dem Unterbau des Gestells 31, vor der Vorrichtung außerhalb des Bereichs des Förderers 14 auf einem Sitzträger 30 montiert. Dieses geschieht, während der Förderer 14 kontinuierlich angetrieben wird. Dabei werden bereits auf dem Obertrum 25 des Förderers 14 angeordnete Sitzträger 30 mit darauf befestigten Sitzen 10 fortlaufend in Behandlungsrichtung 13 durch die erste Behandlungskammer 16 und die zweite Behandlungskammer 17 der Vorrichtung (Tunnelfinisher) hindurchtransportiert. Die Behandlungskammern 16 und 17 weisen in Behandlungsrichtung 13 eine Länge auf, die ausreichend ist, um während des kontinuierlichen Hindurchtransports des jeweiligen Sitzes 10 durch die Behandlungskammern 16 und 17 den Sitz 10 zu finishen und anschließend zu trocknen. Je nach Länge der Behandlungskammern 16 und 17 können hierin gleichzeitig mehrere mit Abstand aufeinanderfolgende Sitze 10 sich befinden; aber auch nur ein einzelner Sitz 10. Es ist auch denkbar, die erste Behandlungskammer 16 länger auszubilden als die darauffolgende zweite Behandlungskammer 17.

Die fertig montierten Sitze 10 werden quergerichtet zur Behandlungsrichtung 13 durch die erste Behandlungskammer 16 hindurchtransportiert, und dabei in der Vorrichtung der Fig. 1 bis 3 sowohl mit Dampf als auch mit erwärmter Luft, insbesondere erwärmter Umluft, beaufschlagt. Die Temperatur der Luft bzw. Umluft ist vorzugsweise höher als die Temperatur des Dampfs. Insbesondere die Beaufschlagung des Bezugs 11 der Sitze 10 mit Dampf führt zu einer Glättung des Bezugs 11.

Abgekühlter Dampf und abgekühlte Luft werden unter den Sitzen 10 an der Bodenwandung 38 der ersten Behandlungskammer 16 entlang zu der neben der ersten Behandlungskammer 16 angeordneten Seitenkammer 19 geleitet und hier abgesaugt, und zwar nachdem gegebenenfalls eine Wiederaufbereitung der Luft, und zwar insbesondere eine Filterung und/oder Entfeuchtung derselben, erfolgt ist.

Nach der Behandlung mit Dampf und erwärmter Luft verlässt jeweils ein so gefinishter Sitz 10 die erste Behandlungskammer 16 und wird vom Förderer 14 in die nachfolgende zweite Behandlungskammer 17 transportiert, und zwar durch eine passend zum Sitz 10 ausgebildete Durchtrittsöffnung in der Trennwand 40 zwischen den beiden Behandlungskammern 16 und 17 hindurch. In der zweiten Behandlungskammer 17 erfolgt eine Trocknung des jeweils ganzen Sitzes 10, und zwar auch des Gestells 31 und gegebenenfalls des Sitzträgers 30. Diese Trocknung erfolgt mit erwärmter Trocknungsluft, die senkrecht durch die Behandlungskammer 17 hindurchströmt und im Bereich des Zwischenbodens 27 der zweiten Behandlungskammer 17 in die sich daneben befindliche Seitenkammer 20 geleitet wird, wo gegebenenfalls nach einer Aufbereitung (Filterung und/oder Entfeuchtung) die Luft aus der Vorrichtung herausgeleitet oder im Kreislauf erneut der zweiten Behandlungskammer 17 zugeführt wird.

Nach dem Trocknen wird der jeweilige Sitz 10 vom Förderer 14 aus dem Tunnelfinisher heraustransportiert, wo der behandelte Sitz 10 mit dem Sitzträger 30 vom Obertrum 25 des Förderers 14 abgenommen wird. Anschließend wird der Sitzträger 30 vom Sitz 10 getrennt. Der Sitzträger 30 wird dann wieder zurücktransportiert zur Vorderseite des Tunnelfinishers, was gegebenenfalls vom Untertrum 26 des Förderers 14 erfolgen kann, indem dazu der leere Sitzträger 30 auf das Untertrum 26 des Förderers 14 aufgesetzt wird.

Bevor der jeweilige Sitz 10 in den Tunnelfinisher, nämlich die erste Behandlungskammer 16 desselben, hineingefördert wird, durchläuft er die Einlaufschleuse 15, die in Behandlungsrichtung 13 vor der ersten Behandlungskammer 16 angeordnet ist. Die Einlaufschleuse 15 verhindert mindestens größtenteils den Eintritt von Außenluft in die erste Behandlungskammer 16 bzw. den Austritt von Dampf und gegebenenfalls warmer Luft aus der ersten Behandlungskammer 16 an die Umgebung. Gleichermaßen verhindert beim Heraustransportieren eines Sitzes 10 aus dem Tunnelfinisher die Auslaufschleuse 18 einen Luftaustausch zwischen der Umgebung und der zweiten Behandlungskammer 17.

Das erfindungsgemäße Verfahren läuft mit dem in den Fig. 4 bis 6 gezeigten Tunnelfinisher wie das vorstehend beschriebene Verfahren ab. Lediglich wird in der ersten Behandlungskammer 16 der jeweilige Sitz 10 bzw. der Bezug 11 nur mit Dampf behandelt. Hier erfolgt demnach eine Behandlung ohne zusätzliche erwärmte Luft bzw. Umluft.

Alternativ zu den vorstehend beschriebenen Verfahren ist es möglich, die Sitze 10 vom Förderer 14 diskontinuierlich durch den Tunnelfinisher hindurchzutransportieren. Die Behandlung der Sitze 10 sowohl in der ersten Behandlungskammer 16 als auch in der zweiten Behandlungskammer 17 findet dann bei stillstehendem Förderer 14 statt. Die Sitze 10 werden dann im momentan stillstehenden, ruhenden Zutand gefinisht und ebenso anschließend getrocknet.

Während der Stillstandsphasen des Förderers 14 zum Finishen und Trocknen der Sitze 10 erfolgt vor dem Tunnelfinisher eine Beschickung des Förderers 14 mit einem noch zu behandelnden Sitz 10. Während der gleichen Zeit wird hinter dem Tunnelfinisher ein behandelter Sitz 10 vom Förderer 14 abgenommen. Bei diesem Verfahren ist es denkbar, Sitzträger 30 zu verwenden, die fest mit dem Förderer 14 verbunden sind. Ein jeweils zu behandelnder Sitz 10 wird dann vor dem Tunnelfinisher auf den sich auf dem Förderer 14 befindenden Sitzträger 30 momentan befestigt. Hinter dem Tunnelfinisher wird beim stillstehenden Förderer 14 der gefinishte Sitz 10 dann wieder vom Sitzträger 30 gelöst, wobei der Sitzträger 30 auf dem Förderer 14 verbleibt. Der Rücktransport leerer Sitzträger 30 zum Anfang des Tunnelfinishers erfolgt dann entlang des Untertrums 26 des Förderers 14.

### Bezugszeichenliste

- 10: Sitz
- 11: Bezug
- 12: Gehäuse
- 13: Behandlungsrichtung
- 14: Förderer
- 15: Einlaufschleuse
- 16: erste Behandlungskammer
- 17: zweite Behandlungskammer
- 18: Auslaufschleuse
- 19: Seitenkammer
- 20: Seitenkammer
- 21: Ventilationskammer
- 22: Ventilator
- 23: Ventilationskammer
- 24: Ventilator
- 25: Obertrum
- 26: Untertrum
- 27: Zwischenboden
- 29: Zwischenraum
- 30: Sitzträger
- 31: Gestell
- 32: Rückenlehne
- 33: Dampfdüse
- 34: Dampfrohr
- 35: Dampfrohr
- 36: Überströmkanal
- 37: Trennwand
- 38: Bodenwandung
- 39: Sauggebläse
- 40: Trennwand
- 41: Wandung
- 42: Wandung

## Patentansprüche

1. Verfahren zum Behandeln von Bezügen von Sitzen für Verkehrsmittel, wobei die Bezüge mit insbesondere Dampf behandelt und **dadurch** geglättet werden, **dadurch gekennzeichnet, dass** die Sitze (10) mit auf ihrem Gestell (31) aufgezogenen Bezügen (11) in mindestens einer Behandlungskammer (16, 17) mit wenigstens Dampf behandelt werden.

2. Verfahren nach Anspruch 1, **dadurch gekennzeichnet, dass** ganze, insbesondere fertig montierte, Sitze (10) kontinuierlich durch die mindestens eine Behandlungskammer (16, 17) zur Dampfbehandlung hindurchtransportiert werden, vorzugsweise quergerichtet.

3. Verfahren nach einem der vorhergehenden Ansprüche, **dadurch gekennzeichnet, dass** in mindestens einer Behandlungskammer (16) die Sitze (10) sowohl mit Dampf als auch mit Luft, insbesondere erwärmter Umluft, vorzugsweise Umluft mit einer höheren Temperatur als der Dampf, behandelt werden.

4. Verfahren nach einem der vorhergehenden Ansprüche, **dadurch gekennzeichnet, dass** die vorzusweise kompletten Sitze (10) in mindestens einer auf die zur Dampfbehandlung dienende Behandlungskammer (16) nachfolgende Behandlungskammer (17) getrocknet werden.

5. Verfahren nach einem der vorhergehenden Ansprüche, **dadurch gekennzeichnet, dass** die Trocknung der Sitze (10) in der gleichen Behandlungskammer durchgeführt wird, in der auch die Behandlung mit Dampf und/oder Luft erfolgt.

6. Verfahren nach einem der vorhergehenden Ansprüche, **dadurch gekennzeichnet, dass** die Sitze (10) vorzugsweise kontinuierlich durch die zur Dampfbehandlung dienende Behandlungskammer (16) und die zum Trocknen dienende Behandlungskammer (17) hindurchtransportiert werden, insbesondere mittels eines Förderers (10).

7. Verfahren nach einem der vorhergehenden Ansprüche, **dadurch gekennzeichnet, dass** der Dampf und/oder die Luft oberhalb des Förderers (14) aus der betreffenden Behandlungskammer (16) abgeführt wird.

8. Verfahren nach einem der vorhergehenden Ansprüche, **dadurch gekennzeichnet, dass** der Dampf oberhalb der Sitze (10) aus der betreffenden Behandlungskammer (16) abgeführt wird.

9. Vorrichtung zum Behandeln von Bezügen von Sitzen für Verkehrsmittel, **gekennzeichnet durch** mindestens eine Behandlungskammer (16, 17), der Dampf und/oder Luft zuführbar sind, und einen **durch** die mindestens eine Behandlungskammer (16, 17) hindurch verlaufenden Förderer (14) für die zu behandelnden Sitze (10).

10. Vorrichtung nach Anspruch 9, **dadurch gekennzeichnet, dass** die oder jede Behandlungskammer (16, 17) so ausgebildet ist, dass ganze, vorzugsweise fertigmontierte Sitze (10) mit ihrem kompletten Gestell (31) vom Förderer (14) durch die jeweilige Behandlungskammer (16, 17) hindurchtransportierbar sind.

11. Vorrichtung nach einem der vorhergehenden Ansprüche, **dadurch gekennzeichnet, dass** der Förderer (14) Sitzträger (30), vorzugsweise zur Aufnahme eines (einzigen) vorzugsweise kompletten Sitzes (10), aufweist, worauf die Sitze (10) mit ihren Gestellen (31) mindestens beim Hindurchtransportieren durch die jeweilige Behandlungskammer (16, 17) angeordnet, vorzugsweise lösbar befestigt, sind.

12. Vorrichtung nach einem der vorhergehenden Ansprüche, **dadurch gekennzeichnet, dass** die Sitzträger (30) mit Abstand aufeinanderfolgend dem Förderer (14) zugeordnet sind.

13. Vorrichtung nach einem der vorhergehenden Ansprüche, **dadurch gekennzeichnet, dass** mehrere, vorzugsweise zwei aufeinanderfolgende Behandlungskammern (16, 17) vorgesehen sind, die vorzugsweise durch mindestens eine Trennwand (37) mit einer Durchlassöffnung für einen Sitz (10) voneinander getrennt sind.

14. Vorrichtung nach einem der vorhergehenden Ansprüche, **dadurch gekennzeichnet, dass** eine (erste) Behandlungskammer (16) zur Behandlung mindestens der Bezüge (11) der (fertigen) Sitze (10) mit Dampf und gegebenenfalls zusätzlich warmer Luft ausgebildet ist.

15. Vorrichtung nach einem der vorhergehenden Ansprüche, **dadurch gekennzeichnet, dass** eine auf die erste Behandlungskammer (16) folgende (zweite) Behandlungskammer (17) zum Trocknen der Sitze (10), insbesondere der Bezüge (11), ausgebildet ist.

16. Vorrichtung nach einem der vorhergehenden Ansprüche, **dadurch gekennzeichnet, dass** die erste Behandlungskammer (16) Düsen, insbesondere Dampfdüsen (33), aufweist, wobei die Dampfdüsen (33) vorzugsweise auf die jeweiligen Flächen der Sitze (10) gerichtet sind.

17. Vorrichtung nach einem der vorhergehenden Ansprüche, **dadurch gekennzeichnet, dass** die Dampfdüsen (33) dem Profilverlauf der Sitze (10) folgend mindestens teilweise um dieselben herum in der Behandlungskammer (16) vorzugsweise ortsunveränderlich angeordnet sind.

18. Vorrichtung nach einem der vorhergehenden Ansprüche, **dadurch gekennzeichnet, dass** die Behandlungskammern (16, 17) insbesondere schleusenartig ausgebildete Einlauf- und Auslauföffnungen aufweisen, wobei vorzugsweise die Einlauföffnung am Anfang der ersten Behandlungskammer (16) und die Auslauföffnung am Ende der zweiten Behandlungskammer (17) angeordnet ist.

19. Vorrichtung nach einem der vorhergehenden Ansprüche, **dadurch gekennzeichnet, dass** im Bereich der Einlassöffnung und/oder Auslassöffnung die betreffende Wandung der jeweiligen Behandlungskammer (16, 17) mindestens teilweise doppelwandig ausgebildet ist zur Bildung eines Schleusenraums, der vorzugsweise mit Unterdruck beaufschlagbar ist.

## Claims

1. Method for treating seat covers for transport vehicles, the covers being treated with, in particular, steam and, as a result, being smoothed, **characterized in that** the seats (10) with covers (11) pulled onto their framework (31) are treated with at least steam in at least one treatment chamber (16, 17).

2. Method according to Claim 1, **characterized in that** entire, in particular ready fitted, seats (10) are transported, preferably directed transversely, continuously through the at least one treatment chamber (16, 17) for the steam treatment.

3. Method according to one of the preceding claims, **characterized in that** the seats (10) are treated both with steam and with air, in particular heated recirculated air, preferably recirculated air at a higher temperature than the steam, in at least one treatment chamber (16).

4. Method according to one of the preceding claims, **characterized in that** the preferably complete seats (10) are dried in at least one treatment chamber (17) following the treatment chamber (16) used for the steam treatment.

5. Method according to one of the preceding claims, **characterized in that** the drying of the seats (10) is carried out in the same treatment chamber in which the treatment with steam and/or air also takes place.

6. Method according to one of the preceding claims, **characterized in that** the seats (10) are transported, preferably continuously, through the treatment chamber (16) used for the steam treatment and through the treatment chamber (17) used for the drying, in particular by means of a conveyor (14).

7. Method according to one of the preceding claims, **characterized in that** the steam and/or the air is removed from the relevant treatment chamber (16) above the conveyor (14).

8. Method according to one of the preceding claims, **characterized in that** the steam is removed from the relevant treatment chamber (16) above the seats (10).

9. Device for treating seat covers for transport vehicles, **characterized by** at least one treatment chamber (16, 17), to which steam and/or air can be fed, and a conveyor (14), which runs through the at least one treatment chamber (16, 17), for the seats (10) to be treated.

10. Device according to Claim 9, **characterized in that** the or each treatment chamber (16, 17) is designed in such a manner that entire, preferably ready fitted, seats (10) together with their entire framework (31), can be transported through the particular treatment chamber (16, 17) by the conveyor (14).

11. Device according to one of the preceding claims, **characterized in that** the conveyor (14) has seat supports (30), preferably for receiving a (single), preferably complete, seat (10), on which the seats (10) together with their frameworks (31) are arranged, preferably are releasably fastened, at least during transportation through the particular treatment chamber (16, 17).

12. Device according to one of the preceding claims, **characterized in that** the seat supports (30) are assigned, following one another at a distance, to the conveyor (14).

13. Device according to one of the preceding claims, **characterized in that** more than one, preferably two consecutive treatment chambers (16, 17) are provided, which are preferably separated from each other by at least one partition (37) with a passage opening for a seat (10).

14. Device according to one of the preceding claims, **characterized in that** a (first) treatment chamber (16) is designed for treating at least the covers (11) of the (finished) seats (10) with steam and, if appropriate, additionally with warm air.

15. Device according to one of the preceding claims, **characterized in that** a (second) treatment chamber (17) following the first treatment chamber (16) is designed for drying the seats (10), in particular the covers (11).

16. Device according to one of the preceding claims, **characterized in that** the first treatment chamber (16) has nozzles, in particular steam nozzles (33), the steam nozzles (33) preferably being directed at the respective surfaces of the seats (10).

17. Device according to one of the preceding claims, **characterized in that** the steam nozzles (33) are arranged in the treatment chamber (16), preferably in an unchangeable position, in a manner following the profile of the seats (10) and at least partially around said profile.

18. Device according to one of the preceding claims, **characterized in that** the treatment chambers (16, 17) have admission and discharge openings designed in particular in the manner of a sluice, with, preferably, the admission opening being arranged at the start of the first treatment chamber (16) and the discharge opening being arranged at the end of the second treatment chamber (17).

19. Device according to one of the preceding claims, **characterized in that**, in the region of the inlet opening and/or outlet opening, the relevant wall of the particular treatment chamber (16, 17) is of double-walled design at least in part, in order to form a sluice chamber which can be subjected preferably to negative pressure.

## Revendications

1. Procédé pour traiter des housses de sièges pour moyens de transport, les housses étant notamment traitées à la vapeur et lissées de ce fait, **caractérisé en ce que** les sièges (10) avec des housses (11) enfilées sur leurs châssis (31) sont traités dans au moins une chambre de traitement (16, 17) avec au moins de la vapeur.

2. Procédé selon la revendication 1, **caractérisé en ce que** des sièges (10) entiers, notamment entièrement montés, sont transportés en continu, de préférence avec une orientation transversale à travers ladite ou lesdites chambres de traitement (16, 17), pour le traitement à la vapeur.

3. Procédé selon l'une quelconque des revendications précédentes, **caractérisé en ce que**, dans au moins une chambre de traitement (16), les sièges (10) sont traités aussi bien à la vapeur qu'à l'air, notamment à l'air réchauffé, de préférence à l'air pulsé, à une température supérieure à celle de la vapeur.

4. Procédé selon l'une quelconque des revendications précédentes, **caractérisé en ce que** les sièges (10) de préférence complets sont séchés dans au moins une chambre de traitement (17) consécutive à la chambre (16) destinée au traitement à la vapeur.

5. Procédé selon l'une quelconque des revendications précédentes, **caractérisé en ce que** le séchage des sièges (10) est réalisé dans la même chambre que celle dans laquelle est également effectué le traitement à la vapeur et/ou à l'air.

6. Procédé selon l'une quelconque des revendications précédentes, **caractérisé en ce que** les sièges (10) sont transportés de préférence en continu à travers la chambre de traitement (16) destinée au traitement à la vapeur et à travers la chambre de traitement (17) destinée au séchage, notamment au moyen d'un convoyeur(14).

7. Procédé selon l'une quelconque des revendications précédentes, **caractérisé en ce que** la vapeur et/ou l'air sont évacués hors de la chambre de traitement (16) concernée, au-dessus du convoyeur (14).

8. Procédé selon l'une quelconque des revendications précédentes, **caractérisé en ce que** la vapeur est évacuée au dessus des sièges (10) hors de la chambre de traitement (16) concernée.

9. Dispositif de traitement de housses de sièges pour moyens de transport, **caractérisé par** au moins une chambre de traitement (16, 17), dans laquelle de la vapeur et/ou de l'air sont susceptibles d'être alimentés, et par un convoyeur (14) pour les sièges (10) à traiter, s'étendant à travers ladite ou lesdites chambres de traitement (16, 17).

10. Dispositif selon la revendication 9, **caractérisé en ce que** la ou chaque chambre de traitement (16, 17) est conçue de sorte que des sièges (10) entiers, de préférence entièrement montés, sont susceptibles d'être transportés avec leurs châssis complets (31) par le convoyeur (14) à travers la chambre de traitement (16, 17) concernée.

11. Dispositif selon l'une quelconque des revendications précédentes, **caractérisé en ce que** le convoyeur (14) comporte des supports (30) de sièges, de préférence pour réceptionner un (unique) siège (10), de préférence complet, sur lesquels les sièges (10), avec leurs châssis (31), sont disposés, de préférence fixés de façon amovible, au moins lors de leur transport à travers la chambre de traitement (16, 17) concernée.

12. Dispositif selon l'une quelconque des revendications précédentes, **caractérisé en ce que** les supports (30) de sièges sont associés consécutivement et avec un écart au convoyeur (14).

13. Dispositif selon l'une quelconque des revendications précédentes, **caractérisé en ce que** plusieurs, de préférences deux, chambres de traitement (16, 17) consécutives, séparées l'une de l'autre par de préférence au moins une paroi de séparation (37) avec une ouverture de passage pour un siège (10), sont prévues.

14. Dispositif selon l'une quelconque des revendications précédentes, **caractérisé en ce que**, une (première) chambre de traitement (16) est prévue pour le traitement d'au moins les housses (11) des sièges (10) (finis) à la vapeur et le cas échéant en supplément à l'air chaud.

15. Dispositif selon l'une quelconque des revendications précédentes, **caractérisé en ce que**, une (deuxième) chambre de traitement (17) consécutive à la première chambre de traitement (16) est conçue pour le séchage des sièges (10), notamment des housses (11).

16. Dispositif selon l'une quelconque des revendications précédentes, **caractérisé en ce que** la première chambre de traitement(16) comporte des buses, notamment des buses à vapeur (33), les buses à vapeur (33) étant orientées de préférence sur les surfaces concernées des sièges (10).

17. Dispositif selon l'une quelconque des revendications précédentes, **caractérisé en ce que** les buses à vapeur (33) sont disposées en suivant la courbe du profil des sièges (10), de préférence de façon stationnaire, au moins partiellement autour de cette dernière, dans la chambre de traitement (16).

18. Dispositif selon l'une quelconque des revendications précédentes, **caractérisé en ce que** les chambres de traitement (18, 17) comportent des ouvertures d'entrée et de sortie conçues notamment à la façon de sas, l'ouverture d'entrée étant disposée de préférence au début de la première chambre de traitement (16) et l'ouverture de sortie étant disposée de préférence à la fin de la deuxième chambre de traitement (17).

19. Dispositif selon l'une quelconque des revendications précédentes, **caractérisé en ce que**, dans la région de l'ouverture d'entrée et/ou de l'ouverture de sortie, la paroi concernée de la chambre de traitement (16, 17) respective est au moins conçue partiellement avec une double paroi, pour la formation d'un espace de sas, pouvant être soumis de préférence à une dépression.
